# EUROPÄISCHE PATENTANMELDUNG

(11) **EP 4 825 180 A1**
(43) Veröffentlichungstag der Anmeldung: **21.10.2026**
(21) Anmeldenummer: 25170866.5
(22) Anmeldetag: 16.04.2025
(51) Int. Cl.: A22C 17/00, A22C 25/16

(54) **VERFAHREN UND VORRICHTUNG ZUM LOKALISIEREN DER RÄUMLICHEN LAGE VON GEWEBESTRUKTUREN, VERFAHREN ZUM TRAINIEREN EINES NEURONALEN NETZES HIERFÜR SOWIE VERFAHREN UND ANORDNUNG ZUM LÖSEN SOLCHER GEWEBESTRUKTUREN**

(71) Anmelder: NORDISCHER MASCHINENBAU RUD. BAADER GMBH + CO KG, 23560 Lübeck (DE)
(72) Erfinder: Steffens, Alexander, 23560 Lübeck (DE)
(74) Vertreter: Stork Bamberger Patentanwälte PartmbB

(57) **Zusammenfassung**

Die Erfindung betrifft ein Verfahren sowie eine Vorrichtung Verfahren zum Lokalisieren der räumlichen Lagen von Gewebestrukturen vorgegebenen Gewebetyps in Artikeln (10) der lebensmittelverarbeitenden Industrie, umfassend die Schritte: Bestrahlen der Artikel (10) mit Röntgenstrahlung und Aufnehmen eines Röntgenbildes (17) auf der der ersten Röntgenquelle (11) abgewandten Seite (14) der Artikel (10) mittels eines Röntgendetektors (13) unter einem ersten Betrachtungswinkel (15), Bestrahlen der Artikel (10) mit Röntgenstrahlung mindestens einer weiteren Röntgenquelle (12) und Aufnehmen mindestens eines weiteren Röntgenbildes (18) des Röntgendetektors (13) unter mindestens einem, von dem ersten Betrachtungswinkel (15) abweichenden, weiteren Betrachtungswinkel (16), Ermitteln hypothetischer Raumbereiche (20) durch Auswerten des ersten Röntgenbildes (17) und des mindestens einen weiteren Röntgenbildes (18) auf Basis mindestens eines vorgegebenen Auswahlkriteriums zur Erkennung der Gewebestrukturen des vorgegebenen Gewebetyps, Übergeben der hypothetischen Raumbereiche (20) als Eingangsdaten (22) an ein neuronales Netz (21), Ermitteln von Positionsdaten (23) der Gewebestrukturen des vorgegebenen Typs als Ausgabedaten (24) mittels des neuronalen Netzes (21) und Bereitstellen der Positionsdaten (23) zur Anzeige und/oder Weitergabe an eine nachgeordnete Maschine zur automatisierten Bearbeitung der Artikel (10) auf Basis der Positionsdaten (23). Des Weiteren betrifft die Erfindung ein Verfahren und eine Anordnung zum automatischen Lösen solcher Gewebestrukturen. Ferner betrifft die Erfindung ein Verfahren zum Trainieren des neuronalen Netzes.

## Beschreibung

Die vorliegende Erfindung betrifft ein Verfahren und eine Vorrichtung zum Lokalisieren der räumlichen Lagen von Gewebestrukturen vorgegebenen Gewebetyps in Artikeln der lebensmittelverarbeitenden Industrie. Weiter betrifft die vorliegende Erfindung ein Verfahren zum Trainieren mindestens eines neuronalen Netzes zum Lokalisieren der räumlichen Lage von Gewebestrukturen vorgegebenen Gewebetyps in Artikeln der lebensmittelverarbeitenden Industrie.

Des Weiteren betrifft die Erfindung ein Verfahren und eine Anordnung zum automatischen Lösen von Gewebestrukturen vorgegebenen Gewebetyps aus Artikeln der lebensmittelverarbeitenden Industrie.

Um Artikel der lebensmittelverarbeitenden Industrie, wie beispielsweise Fische, Teilen von Fischen, insbesondere Fischfilets sowie von Geflügel oder Geflügelteilen, automatisch zu bearbeiten, ist es regelmäßig erforderlich, verschiedene Gewebestrukturen, wie beispielsweise Fett-, Knochen- oder Knorpelgewebe, zu differenzieren und insbesondere deren räumliche Lage festzustellen.

Die Bestimmung der räumlichen Lage derartiger Gewebestrukturen ist grundsätzlich mittels computertomografischer Verfahren möglich. Dies ist aber für den praktischen Einsatz in der automatisierten Verarbeitung von Artikeln der lebensmittelverarbeitenden Industrie aus mehreren Gründen ungeeignet. So erfordern derartige Verfahren, die Erstellung einer Vielzahl von Röntgenbildern aus unterschiedlichen Betrachtungswinkeln, um eine hinreichend große Ausgangsdatenlage zu schaffen, um mittels der genannten Verfahren die jeweiligen Raumbereiche hieraus errechnen zu können.

Der hier erforderliche Zeitaufwand steht in direktem Widerspruch zu den gewünschten hohen Durchsatzleistungen derartiger automatischer Verarbeitungsanlagen. Zudem sind derartige Verfahren sowohl in der Anschaffung als auch im Unterhalt mit hohen Kosten verbunden.

Es ist daher Aufgabe der vorliegenden Erfindung, ein Verfahren und eine Vorrichtung bereitzustellen, die die Lokalisierung von Gewebestrukturen vorgegebenen Typs auch bei hohen Durchsatzraten erlaubt. Zudem sollen die Kosten für ein derartiges Verfahren und eine derartige Vorrichtung möglichst gering ausfallen. Ebenso ist es Aufgabe der Erfindung ein Verfahren und eine Vorrichtung bereitzustellen, bei denen der rechentechnische Aufwand zur Lokalisierung der Gewebestrukturen möglichst gering gehalten wird, sodass eine Auswertung in Echtzeit oder jedenfalls mit möglichst geringer zeitlicher Verzögerung erreicht wird. Zudem ist es Aufgabe der Erfindung ein Verfahren und eine Vorrichtung bereitzustellen, die unter den genannten Rahmenbedingungen eine präzise Lokalisierung der genannte Gewebestrukturen und damit insbesondere auch die Voraussetzungen für ein präzises Bearbeiten der Artikel zu ermöglichen. Insbesondere soll eine solche Lokalisierung und ggf. Bearbeitung bei bewegten Artikeln, also beispielsweise bei kontinuierlich geförderten Artikeln, erfolgen.

Die Aufgabe wird durch das eingangs genannte Verfahren dadurch gelöst, dass dieses die folgenden Schritte umfasst: Bestrahlen der Artikel mit Röntgenstrahlung einer ersten Röntgenquelle und Aufnehmen eines Röntgenbildes auf der der ersten Röntgenquelle abgewandten Seite der Artikel mittels eines ersten Röntgendetektors unter einem ersten Betrachtungswinkel, Bestrahlen der Artikel mit Röntgenstrahlung mindestens einer weiteren Röntgenquelle und Aufnehmen mindestens eines weiteren Röntgenbildes mittels eines weiteren Röntgendetektors unter mindestens einem, von dem ersten Betrachtungswinkel abweichenden, weiteren Betrachtungswinkel, Ermitteln hypothetischer Raumbereiche durch Auswerten des ersten Röntgenbildes und des mindestens einen weiteren Röntgenbildes auf Basis mindestens eines vorgegebenen Auswahlkriteriums zur Erkennung der Gewebestrukturen des vorgegebenen Gewebetyps, Übergeben der hypothetischen Raumbereiche als Eingangsdaten an ein neuronales Netz, Ermitteln von Positionsdaten der Gewebestrukturen des vorgegebenen Typs als Ausgabedaten mittels des neuronalen Netzes und Bereitstellen der Positionsdaten zur Anzeige und/oder Weitergabe an eine nachgeordnete Maschine zur automatisierten Bearbeitung der Artikel auf Basis der Positionsdaten.

Auf diese Weise ist es erstmals möglich, Gewebestrukturen vorgegebenen Typs räumlich mit entsprechender Präzision in möglichst kurzer Zeit zu lokalisieren und diese auf Basis der erfolgten Lokalisation präzise zu bearbeiten. Ein besonderer Vorteil besteht darin, dass das Lokalisieren der genannten Gewebestrukturen bei bewegten Artikeln erfolgt. Vorteilhafterweise erfolgt diese erfindungsgemäß auf Basis einer geringeren Anzahl von Röntgenbildern, vorzugsweise nur auf Basis eines Röntgenbildes oder auf Basis zweier Röntgenbilder, nämlich dem ersten Röntgenbild und dem weiteren Röntgenbild. Erfindungsgemäß wird das erste Röntgenbild und das mindestens eine weitere Röntgenbild ausgewertet, um hypothetische Raumbereiche zu ermitteln, also solche in denen sich möglicherweise die zu erkennenden Gewebestrukturen vorgegeben Typs befinden. Beispielsweise bezeichnen diese hypothetischen Raumbereiche zwei- oder dreidimensionale Teilräume, in denen gemäß vorgenanntem Auswahlkriteriums die Möglichkeit besteht, dass Gewebestrukturen des vorgegebenen Typs vorhanden sind. Bei den Gewebestrukturen handelt es sich beispielsweise um Knorpel- oder Grätengewebe, insbesondere um Pinbones.

Aufgrund der geringen Röntgenbildanzahl ist das Gesamtsystem unterbestimmt, sodass analytisch keine eindeutige Lösung existiert. Diese möglichen Lösungen werden durch die hypothetischen Raumbereiche charakterisiert. Die hypothetischen Raumbereiche dienen erfindungsgemäß als Eingangsdaten des neuralen Netzes. Das neuronale Netz ist eingerichtet bzw. angelernt, auf Basis dieser Eingangsdaten entsprechende Positionsdaten der Gewebestrukturen vorgegeben Typs als Ausgabedaten bereitzustellen.

Durch das Expertenwissen des neuronalen Netzes gelingt es so, aus der Vielzahl der möglichen Positionen, die durch die hypothetischen Raumbereiche beschrieben werden, diejenigen zu ermitteln, in denen tatsächlich die gesuchten Gewebestrukturen vorhanden sind. Auf diese Weise ist es nun möglich, mit einer - gegenüber der Verwendung eines CT-basierten Verfahrens - nur geringen Ausgangsdatenlage, nämlich ausgehend von mindestens zwei Röntgenbildern - mit vergleichsweise geringem Rechenaufwand die räumliche Lage der Gewebestrukturen vorgegebenen Gewebetyps präzise zu lokalisieren. Begünstigt wird dies erfindungsgemäß dadurch, dass es in der Regel genügt, nur zwei der genannten Röntgenbilder aufzunehmen, sodass die Artikel entsprechend schnell abgetastet werden können und so entsprechend hohe Durchsatzraten realisierbar sind.

Zur Aufnahme des ersten Röntgenbildes und des weiteren Röntgenbildes kann auch nur ein einziger Röntgendetektor verwendet werden, der in diesem Fall jeweils Röntgenbilder unter dem genannten ersten Betrachtungswinkel und dem weiteren Betrachtungswinkel von den Artikeln aufnimmt.

Eine zweckmäßige Ausgestaltung der Erfindung ist dadurch gekennzeichnet, dass das Ermitteln der hypothetischen Raumbereiche mittels des vorgegebenen Auswahlkriteriums derart erfolgt, dass Bereiche mit möglicherweise vorhandenem Gewebe des vorgegebenen Gewebetyps markiert werden. Anders ausgedrückt finden in den hypothetischen Raumbereichen alldiejenigen Bereiche keine Berücksichtigung, die auf Basis des ersten und des mindestens einen weiteren Röntgenbildes unter Nutzung des vorgegebenen Auswahlkriteriums ausgeschlossen werden können. Eine solche Markierung kann beispielsweise dadurch erfolgen, dass Bildpunkte im Raum, die im Bereich möglichen Gewebes des vorgegebenen Gewebetyps liegen mit einer logischen Eins gekennzeichnet werden, während die anderen Bereiche mit einer logischen "Null" gekennzeichnet werden. Alternativ ist jede andere Art der digitalen Markierung der Daten einsetzbar.

Eine bevorzugte Weiterbildung der Erfindung zeichnet sich durch Fördern der Artikel in eine Förderrichtung und zeilenweises Erfassen des ersten Röntgenbildes und des mindestens einen weiteren Röntgenbildes aus. Zum Einsatz kommen beispielsweise standardisierte und robuste Röntgenzeilen-Sensoren. Durch zeilenweises Abtasten werden so die genannten zwei-dimensionalen Röntgenbilder erzeugt. Dies bietet den Vorteil, dass es nicht erforderlich ist, die Artikel anzuhalten. Vielmehr ist es so möglich, die Artikel kontinuierlich, d. h. unterbrechungsfrei, zu fördern und währenddessen die zuvor beschriebene Lokalisierung vorgegebener Gewebetypen vorzunehmen.

Eine weitere zweckmäßige Ausbildung der Erfindung ist dadurch gekennzeichnet, dass die hypothetischen Raumbereiche zeilenweise ermittelt werden. Vorteilhafterweise werden so die ermittelten Daten unmittelbar verarbeitet und auf Basis dieser - ebenfalls zeilenweise - die hypothetischen Raumbereiche ermittelt. Die Ermittlung dieser Raumbereiche erfolgt also unmittelbar, sobald die Daten einer Zeile vorliegen. Vorteilhafterweise werden so die ermittelten Röntgendaten Zeile für Zeile während deren Erfassung verarbeitet. Auf diese Weise wird die Zeitdauer, die von der Ermittlung der Daten einer Röntgenzeile zur nächsten vergeht, genutzt, um diese Daten unmittelbar nach deren Erfassung zu verarbeiten.

Eine weitere zweckmäßige Ausgestaltung der Erfindung ist dadurch gekennzeichnet, dass an das neuronale Netz als Eingangsdaten die Raumbereiche jeweils zeilenweise übergeben werden. Auf diese Weise wird die Komplexität des neuronalen Netzes maßgeblich reduziert, indem die Eingangsdaten zeilenweise bereitgestellt werden. Insbesondere ist es vorteilhaft, wenn das neuronale Netz eingerichtet ist, ein oder mehrere benachbarte Zeilen als Eingangsdaten zu verarbeiten. Hierdurch ist es möglich, die Wahrscheinlichkeit mit der das neuronale Netz zutreffend hypothetische Raumbereiche ermittelt, die Gewebe des vorgegebenen Gewebetyps enthalten, signifikant zu steigern.

Eine bevorzugte Weiterbildung der Erfindung umfasst das Ermitteln hypothetischer Raumbereiche, kombiniert auf Basis des ersten Röntgenbildes und des mindestens einen weiteren Röntgenbildes. Dies bietet den Vorteil, die Anzahl hypothetischer Raumbereiche auf eine geringere zu reduzieren. Dies führt sowohl zu einer präziseren Ermittlung der tatsächlichen Positionsdaten der Gewebestrukturen des vorgegebenen Typs in Form der Ausgabedaten. Zugleich ist es so möglich, die Komplexität des eingesetzten neuronalen Netzes zu reduzieren.

Die Aufgabe wird auch durch das eingangs genannte Verfahren zum Trainieren mindestens eines neuronalen Netzes zum Lokalisieren der räumlichen Lage von Gewebestrukturen vorgegebenen Gewebetyps in Artikeln der lebensmittelverarbeitenden Industrie gelöst, wobei dieses die folgenden Schritte umfasst: Bereitstellen von ersten Röntgenbildern unter einem ersten Betrachtungswinkel und jeweils mindestens einem zugehörigen weiteren Röntgenbild unter einem weiteren Betrachtungswinkel einer Vielzahl von Artikeln, Festlegen von den Artikeln jeweils zugeordneten Referenzpunkten als Positionsdaten zur Kennzeichnung der räumlichen Positionen der Gewebestrukturen des vorgegebenen Typs, Ermitteln hypothetischer Raumbereiche durch Auswerten des ersten Röntgenbildes und des mindestens einen weiteren Röntgenbildes auf Basis mindestens eines vorgegebenen Auswahlkriteriums zur Erkennung der Gewebestrukturen des vorgegebenen Gewebetyps, Eingeben der hypothetischen Raumbereiche als Eingangsdaten sowie der Referenzpunkte als Zieldaten zum Training des neuronalen Netzes, repetierendes Anpassen der Gewichte des neuronalen Netzes auf Basis der Differenz zwischen den die Positionen der Gewebestrukturen des vorgegebenen Gewebetyps repräsentierenden und vom neuronalen Netz erzeugten Ausgabedaten und den Zieldaten. Die Referenzpunkte bezeichnen also Koordinaten von solchen Punkten, in denen sich Gewebestrukturen des vorgegeben Typs befinden und die damit die gewünschten Ausgabedaten des neuronalen Netzes darstellen.

Das vorgenannte Verfahren dient dem Training des neuronalen Netzes, um dieses in die Lage zu versetzen, auf Basis der hypothetischen Raumbereiche als Eingangsdaten, die Positionen der Gewebestrukturen des vorgegebenen Gewebetyps als Ausgabedaten bereitzustellen. Die Referenzpunkte werden beispielsweise durch Auswerten der Röntgenbilddaten und oder durch Auswerten von CT-Bilder der Artikel bestimmt.

Erfindungsgemäß ist es auch vorgesehen, die hypothetischen Raumbereiche, also die Eingangsdaten sowie die Positionen der Gewebestrukturen des vorgegebenen Gewebetyps als Ausgangsdaten, also in Form der genannten Referenzpunkte, durch ein Simulationsverfahren bereitzustellen. Auf diese Weise ist es möglich, eine Vielzahl an Trainingsdatensätzen, die jeweils die Eingangs- und Ausgangsdaten enthalten, für das Training des neuronalen Netzes bereitzustellen. Hierzu werden beispielsweise zufallsgesteuert die Positionen bestimmter Gewebestrukturen vorgegeben und durch einen Simulationsprozess das mindestens eine erste Röntgenbild und/oder weitere Röntgenbild errechnet.

Ferner wird die Aufgabe durch die eingangs genannte Vorrichtung zum Lokalisieren der räumlichen Lagen von Gewebestrukturen vorgegebenen Gewebetyps in Artikeln der lebensmittelverarbeitenden Industrie gelöst, wobei die Vorrichtung eine zum Bestrahlen der Artikel mit Röntgenstrahlung eingerichtete ersten Röntgenquelle mit einem zum Aufnehmen eines Röntgenbildes unter einem ersten Betrachtungswinkel auf der der ersten Röntgenquelle abgewandten Seite der Artikel angeordneten ersten Röntgendetektor, mindestens eine zum Bestrahlen der Artikel mit Röntgenstrahlung eingerichtete weitere Röntgenquelle mit mindestens einem zum Aufnehmen eines weiteren Röntgenbildes unter mindestens einem von dem ersten Betrachtungswinkel abweichenden weiteren Betrachtungswinkel eingerichteten weiteren Röntgendetektor, eine Auswerteeinrichtung, die zum Ermitteln hypothetischer Raumbereiche durch Auswerten des ersten Röntgenbildes und des mindestens einen weiteren Röntgenbildes auf Basis mindestens eines vorgegebenen Auswahlkriteriums zur Erkennung der Gewebestrukturen des vorgegebenen Gewebetyps und zum Übergeben der hypothetischen Raumbereiche als Eingangsdaten an ein neuronales Netz ausgebildet und eingerichtet ist, umfasst, und wobei das neuronale Netz eingerichtet ist, als Ausgabedaten Positionsdaten der Gewebestrukturen des vorgegebenen Gewebetyps zu ermitteln und die Positionsdaten zur Anzeige und/oder Weitergabe an eine nachgeordnete Maschine zur automatisierten Bearbeitung der Artikel auszugeben und/oder bereitzustellen.

Die mit der vorliegenden Erfindung erzielbaren Vorteile wurden bereits im Zusammenhang mit dem erfindungsgemäßen Verfahren zum Lokalisieren der räumlichen Lagen von Gewebestrukturen vorgegebenen Gewebetyps in Artikeln der lebensmittelverarbeitenden Industrie, sowie zum Trainieren mindestens eines neuronalen Netzes zum Lokalisieren der räumlichen Lage von Gewebestrukturen vorgegebenen Gewebetyps in Artikeln der lebensmittelverarbeitenden Industrie im Detail beschrieben. Zur Vermeidung von Wiederholungen verweisen wir auch im Zusammenhang mit dem anderen erfindungsgemäßen Verfahren sowie mit der erfindungsgemäßen Vorrichtung auf die dort genannten Vorteile, die auf die im Wesentlichen analog zu dem Verfahren abgefassten Verfahrensansprüche in gleicher Weise gelten. Im Folgenden wird daher zu dem weiteren erfindungsgemäßen Verfahren sowie zu der erfindungsgemäßen Vorrichtung nur zu ausgewählten Aspekten Stellung genommen.

Eine weitere zweckmäßige Ausgestaltung der Erfindung zeichnet sich dadurch aus, dass die Gewebestrukturen vorgegebenen Gewebetyps Knochen-, Knorpel- oder Grätengewebe sind. Gewebestrukturen vorgegebenen Gewebetyps können auch Gewebedefekte sein, beispielsweise solche, die durch mechanische Einwirkung von außen auf das Gewebe entstehen, oder aber solche durch krankhafte Veränderung.

Eine bevorzugte Weiterbildung der Erfindung ist dadurch gekennzeichnet, dass die ersten Röntgenbilder, die die zugehörigen mindestens einen weiteren Röntgenbilder als Eingangsdaten und die Referenzpunkte als Zieldaten des neuronalen Netzes mittels Berechnung nutzen, synthetisiert werden. Einzelheiten einer solchen Synthese basieren auf der zuvor beschriebenen Simulation.

Gemäß einer weiteren bevorzugten Ausbildung der Erfindung ist diese dadurch gekennzeichnet, dass die ersten Röntgenbilder und die zugehörigen mindestens einen weiteren Röntgenbilder als Eingangsdaten durch Bestrahlen der Artikel mit Röntgenstrahlung einer ersten Röntgenquelle und Aufnehmen eines Röntgenbildes auf der der ersten Röntgenquelle abgewandten Seite der Artikel mittels eines ersten Röntgendetektors unter einem ersten Betrachtungswinkel und Bestrahlen der Artikel mit Röntgenstrahlung mindestens einer weiteren Röntgenquelle und Aufnehmen mindestens eines weiteren Röntgenbildes mittels eines weiteren Röntgendetektors unter mindestens einem weiteren von dem ersten Betrachtungswinkel abweichenden weiteren Betrachtungswinkel erzeugt werden und, dass die Positionsdaten der Gewebestrukturen des vorgegebenen Typs eines jeden der Artikel unter Verwendung eines hochauflösenden bildgebenden Verfahrens ermittelt werden. Die Verwendung derartiger hochauflösender Verfahren umfasst u.a. auch die zuvor genannte Erstellung von CT-Bildern. Es sind auch andere bildgebende Verfahren einsetzbar, beispielsweise MRT- oder Ultraschallbildgebung.

Eine weitere zweckmäßige Ausbildung der Erfindung ist dadurch gekennzeichnet, dass die Auswerteeinrichtung ausgebildet ist, die hypothetischen Raumbereiche mittels des vorgegebenen Auswahlkriteriums derart zu ermitteln, dass Bereiche mit möglicherweise vorhandenem Gewebe des vorgegebenen Gewebetyps markiert werden.

Eine bevorzugte Weiterbildung der Erfindung umfasst weiter eine zum Fördern der Artikel in eine Förderrichtung eingerichtete Fördereinrichtung, wobei der erste Röntgendetektor und der mindestens eine weitere Röntgendetektor zum zeilenweisen Erfassen des ersten und des mindestens einen weiteren Röntgenbildes als Röntgen-Zeilendetektoren ausgebildet sind.

Gemäß einer weiteren bevorzugten Ausbildung der Erfindung ist die Auswerteeinrichtung ausgebildet ist, die hypothetischen Raumbereiche zeilenweise zu ermitteln.

Eine weitere zweckmäßige Ausbildung der Erfindung ist dadurch gekennzeichnet, dass die Auswerteeinrichtung eingerichtet ist, an das neuronale Netz als Eingangsdaten die Raumbereiche jeweils zeilenweise zu übergeben.

Des Weiteren wird die Aufgabe durch das eingangs genannte Verfahren zum automatischen Lösen von Gewebestrukturen vorgegebenen Gewebetyps aus Artikeln der lebensmittelverarbeitenden Industrie gelöst, umfassend die Schritte: Ermitteln von Positionsdaten der Gewebestrukturen vorgegebenen Gewebetyps in den Artikeln mittels einem Verfahren mit den zuvor beschriebenen Merkmalen und Steuern mindestens eines zum Herauslösen der Gewebestrukturen aus den Artikeln eingerichteten Werkzeugs auf Basis der Positionsdaten.

Ferner wird die Aufgabe durch die eingangs genannte Anordnung zum automatischen Lösen von Gewebestrukturen vorgegebenen Gewebetyps aus Artikeln der lebensmittelverarbeitenden Industrie gelöst, umfassend eine Vorrichtung zum Ermitteln von Positionsdaten der Gewebestrukturen vorgegebenen Gewebetyps in den Artikeln mit den zuvor beschriebenen Merkmalen, eine Steuereinheit und ein Werkzeug, wobei die Steuereinheit ausgebildet ist, das Schneidwerkzeug zum Herauslösen der Gewebestrukturen aus den Artikeln auf Basis der Positionsdaten zu steuern.

Mittels der erfindungsgemäßen Anordnung ist es möglich, Gewebestrukturen des vorgegeben Typs automatisch aus dem jeweiligen Artikel herauszulösen. Als Werkzeug kommen beispielsweise steuerbare Messer- oder Wasserstrahlschneidanordnungen zum Einsatz. Auch können die Werkzeuge als gesteuerte Greifer, beispielsweise zum Ziehen von Gräten, ausgebildet und eingerichtet sein.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine schematische Darstellung der Anordnung der Röntgenquellen und Röntgendetektor,
- Fig. 2: eine schematische Darstellung in Form eines Blockdiagramms zur Veranschaulichung von erfindungsgemäßem Verfahren und Vorrichtung,
- Fig. 3: eine perspektivische Ansicht der in Figur 1 gezeigten Anordnung und
- Fig. 4: eine Seitenansicht der in den Figuren 1 und 3 dargestellten Anordnung.

Im Folgenden werden die erfindungsgemäßen Verfahren detailliert beschrieben. Sämtliche Ausführungen zu diesen Verfahren gelten in analoger Weise auch für die entsprechende Vorrichtung sowie für die erfindungsgemäße Anordnung.

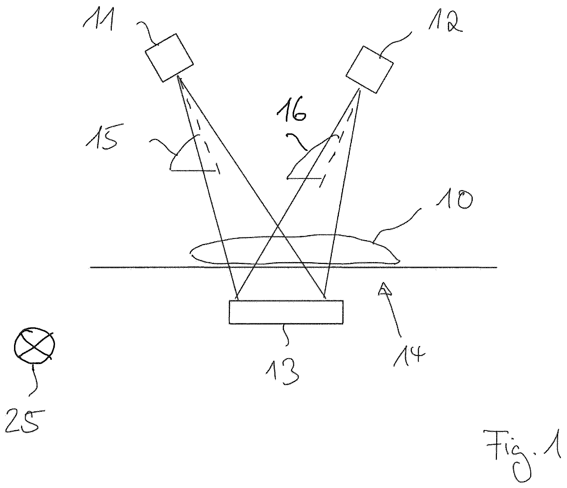

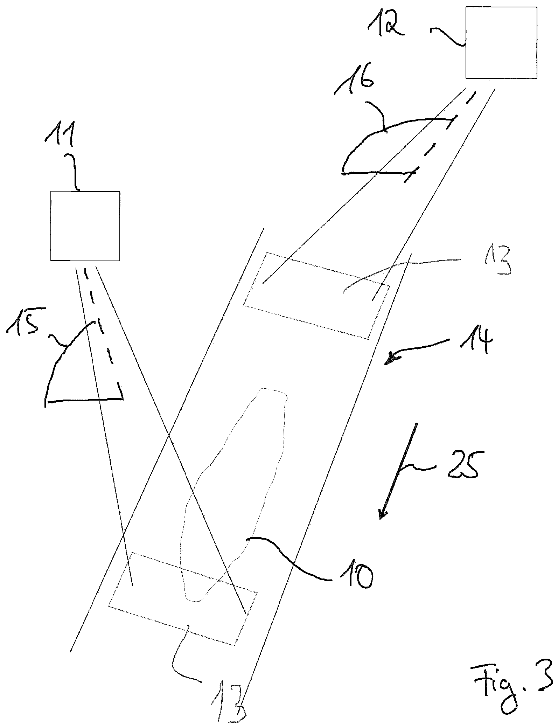

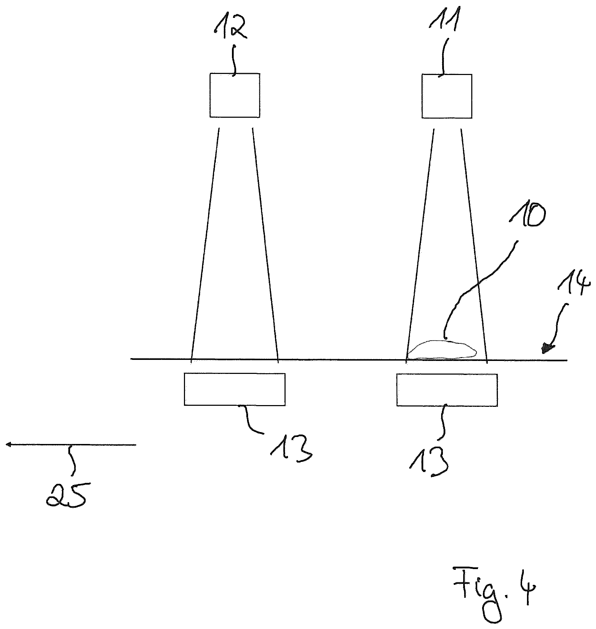

Wie in der schematischen Ansicht in Fig.1 sowie den weiteren Ansichten gemäß der Figuren 3 und 4 dargestellt, werden Artikel 10 mit Röntgenstrahlung einer ersten Röntgenquelle 11 und mindestens einer weiteren Röntgenquelle 12 bestrahlt. Mittels eines ersten Röntgendetektors 13 wird ein Röntgenbild 17 auf der der ersten Röntgenquelle 11 abgewandten Seite 14 der Artikel 10 unter einem ersten Betrachtungswinkel 15 sowie mindestens ein weiteres Röntgenbild 18 unter einem weiteren Betrachtungswinkel 16 aufgenommen, wobei der weitere Betrachtungswinkel 16 von dem ersten Betrachtungswinkel 15 abweichend gewählt ist. Vorzugsweise sind - wie in der Zeichnung gezeigt - zwei der Röntgendetektoren 13 vorhanden, die jeweils einer der Röntgenquellen 11, 12 zugeordnet sind.

Die Röntgenbilder 17, 18 werden beispielsweise mittels der in Fig. 1 gezeigten Röntgendetektoren 13 nacheinander aufgenommen. Unabhängig davon, wie viele der Röntgendetektoren 13 vorhanden sind, werden die beiden genannten Röntgenbilder 17, 18 stets unter dem ersten Betrachtungswinkel 15 und dem einen weiteren Betrachtungswinkel 16 aufgenommen, die jeweils unterschiedlich sind.

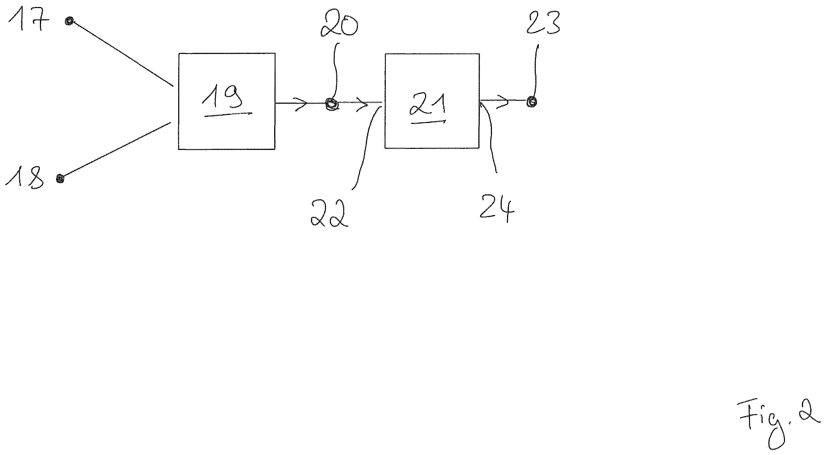

Wie in Fig. 2 gezeigt erfolgt ein Auswerten, beispielsweise mit einer Auswerteeinheit 19, des ersten Röntgenbildes 17 und des mindestens einen weiteren Röntgenbildes 18 auf Basis mindestens eines vorgegebenen Auswahlkriteriums zur Erkennung der Gewebestrukturen des vorgegebenen Gewebetyps um hypothetische Raumbereiche 20 zu ermitteln.

Die ermittelten hypothetischen Raumbereiche werden als Eingangsdaten 22 an ein neuronales Netz 21 übergeben. Das neuronale Netz 21 ist eingerichtet, hieraus Positionsdaten 23 der Gewebestrukturen des vorgegebenen Typs als Ausgabedaten 24 zu ermitteln und diese zur Anzeige und/oder Weitergabe an eine - in der Zeichnung nicht gezeigte - nachgeordnete Maschine zur automatisierten Bearbeitung der Artikel 10 auf Basis der Positionsdaten 23 bereitzustellen.

Vorzugsweise werden die Artikel 10 in eine Förderrichtung 25 mittels einer - in der Zeichnung nicht gezeigten - Förderreinrichtung gefördert und das erste Röntgenbild 17 sowie das mindestens eine weitere Röntgenbild 18 zeilenweise erfasst. Der Röntgendetektor 13 ist vorzugsweise als Röntgenzeilendetektor ausgebildet. Weiter bevorzugt erfolgt die - in Fig. 2 dargestellte - Verarbeitung der Röntgenbilder 17, 18 ebenfalls zeilenweise. Insbesondere werden weiter bevorzugt auch die hypothetischen Raumbereiche 20 zeilenweise ermittelt. Die in Fig.2 schematisch dargestellte Übergabe der hypothetischen Raumbereiche 20 als Eingangsdaten 22 an das neuronale Netz 21 erfolgt - in analoger Weise - vorzugsweise ebenfalls zeilenweise.

Die vorliegende Erfindung umfasst auch das eingangs genannte Verfahren zum Trainieren des mindestens einen neuronalen Netzes 21, derart dass dieses zum Lokalisieren der räumlichen Lage von Gewebestrukturen vorgegebenen Gewebetyps in Artikeln 10 der lebensmittelverarbeitenden Industrie ausgebildet und eingerichtet ist. Hierzu werden die ersten Röntgenbilder 17 jeweils unter dem ersten Betrachtungswinkel 15 und jeweils mindestens ein zugehöriges weiteres Röntgenbild 18 unter dem jeweiligen weiteren Betrachtungswinkel 16 einer Vielzahl von Artikeln 10 bereitgestellt.

Zu jedem der Artikel 10 werden sodann jeweils zugeordnete Referenzpunkten als Positionsdaten 23 zur Kennzeichnung der räumlichen Positionen der Gewebestrukturen des vorgegebenen Typs als Zieldaten festgelegt. Das Ermitteln der hypothetischen Raumbereiche 20 erfolgt - wie zuvor beschrieben - durch Auswerten des ersten Röntgenbildes 17 und des mindestens einen weiteren Röntgenbildes 18 auf Basis mindestens eines vorgegebenen Auswahlkriteriums zur Erkennung der Gewebestrukturen des vorgegebenen Gewebetyps.

Die so ermittelten hypothetischen Raumbereiche 20 werden als Eingangsdaten 22 sowie die Referenzpunkte als Zieldaten, also als die gewünschten Ausgabedaten 24, zum Training des neuronalen Netzes 21 eingegeben bzw. dem neuronalen Netz 21 zur Verfügung gestellt. Durch repetierendes Anpassen der Gewichte des neuronalen Netzes 21 auf Basis der Differenz zwischen den die Positionen der Gewebestrukturen des vorgegebenen Gewebetyps repräsentierenden und vom neuronalen Netz 21 erzeugten Ausgabedaten 24 sowie den Zieldaten wird das neuronale Netz 21 trainiert, um dieses in die Lage zu versetzen, auf Basis der hypothetischen Raumbereiche als Eingangsdaten 22, die Positionen der Gewebestrukturen des vorgegebenen Gewebetyps als Ausgabedaten 24 bereitzustellen. Insbesondere werden die Positionsdaten 23 der Gewebestrukturen des vorgegebenen Typs eines jeden der Artikel 10 unter Verwendung eines hochauflösenden bildgebenden Verfahrens ermittelt.

Die vorliegende Erfindung umfasst auch das eingangs genannte Verfahren sowie die genannte Anordnung zum automatischen Lösen von Gewebestrukturen vorgegebenen Gewebetyps aus den Artikeln 10 der lebensmittelverarbeitenden Industrie. Zunächst werden hierzu die Positionsdaten 23 der Gewebestrukturen vorgegebenen Gewebetyps in den Artikeln 10 mittels des Verfahrens mit den zuvor beschriebenen Merkmalen ermittelt. Zum präzisen und genauen Herauslösen der Gewebestrukturen aus den Artikeln 10 werden entsprechend eingerichtete - in der Zeichnung nicht gezeigte - Werkzeuge auf Basis der Positionsdaten gesteuert.

## Patentansprüche

1. Verfahren zum Lokalisieren der räumlichen Lagen von Gewebestrukturen vorgegebenen Gewebetyps in Artikeln (10) der lebensmittelverarbeitenden Industrie, umfassend die Schritte:
- Bestrahlen der Artikel (10) mit Röntgenstrahlung einer ersten Röntgenquelle (11) und Aufnehmen eines Röntgenbildes (17) auf der der ersten Röntgenquelle (11) abgewandten Seite (14) der Artikel (10) mittels eines ersten Röntgendetektors (13) unter einem ersten Betrachtungswinkel (15),
- Bestrahlen der Artikel (10) mit Röntgenstrahlung mindestens einer weiteren Röntgenquelle (12) und Aufnehmen mindestens eines weiteren Röntgenbildes (18) mittels eines weiteren Röntgendetektors (13) unter mindestens einem, von dem ersten Betrachtungswinkel (15) abweichenden, weiteren Betrachtungswinkel (16),
- Ermitteln hypothetischer Raumbereiche (20) durch Auswerten des ersten Röntgenbildes (17) und des mindestens einen weiteren Röntgenbildes (18) auf Basis mindestens eines vorgegebenen Auswahlkriteriums zur Erkennung der Gewebestrukturen des vorgegebenen Gewebetyps,
- Übergeben der hypothetischen Raumbereiche (20) als Eingangsdaten (22) an ein neuronales Netz (21),
- Ermitteln von Positionsdaten (23) der Gewebestrukturen des vorgegebenen Typs als Ausgabedaten (24) mittels des neuronalen Netzes (21) und
- Bereitstellen der Positionsdaten (23) zur Anzeige und/oder Weitergabe an eine nachgeordnete Maschine zur automatisierten Bearbeitung der Artikel (10) auf Basis der Positionsdaten (23).

2. Verfahren nach Anspruch 1, **dadurch gekennzeichnet, dass** das Ermitteln der hypothetischen Raumbereiche (20) mittels des vorgegebenen Auswahlkriteriums derart erfolgt, dass Bereiche mit möglicherweise vorhandenem Gewebe des vorgegebenen Gewebetyps markiert werden.

3. Verfahren nach einem der Ansprüche 1 oder 2, **gekennzeichnet durch** Fördern der Artikel (10) in eine Förderrichtung (25) und zeilenweises Erfassen des ersten Röntgenbildes (17) und des mindestens einen weiteren Röntgenbildes (18).

4. Verfahren nach Anspruch 3, **dadurch gekennzeichnet, dass** die hypothetischen Raumbereiche (20) zeilenweise ermittelt werden.

5. Verfahren nach einem der Ansprüche 3 und 4, **dadurch gekennzeichnet, dass** an das neuronale Netz (21) als Eingangsdaten (22) die hypothetischen Raumbereiche (20) jeweils zeilenweise übergeben werden.

6. Verfahren nach einem der Ansprüche 1 bis 5, **dadurch gekennzeichnet, dass** das Ermitteln der hypothetischen Raumbereiche (20) kombiniert auf Basis des ersten Röntgenbildes (17) und des mindestens einen weiteren Röntgenbildes (18) erfolgt.

7. Verfahren zum Trainieren mindestens eines neuronalen Netzes zum Lokalisieren der räumlichen Lage von Gewebestrukturen vorgegebenen Gewebetyps in Artikeln (10) der lebensmittelverarbeitenden Industrie, umfassend die Schritte:
- Bereitstellen von ersten Röntgenbildern (17) unter einem ersten Betrachtungswinkel (15) und jeweils mindestens einem zugehörigen weiteren Röntgenbild (18) unter einem weiteren Betrachtungswinkel (16) einer Vielzahl von Artikeln,
- Festlegen von den Artikeln (10) jeweils zugeordneten Referenzpunkten als Positionsdaten (23) zur Kennzeichnung der räumlichen Positionen (23) der Gewebestrukturen des vorgegebenen Typs,
- Ermitteln hypothetischer Raumbereiche (20) durch Auswerten des ersten Röntgenbildes (17) und des mindestens einen weiteren Röntgenbildes (18) auf Basis mindestens eines vorgegebenen Auswahlkriteriums zur Erkennung der Gewebestrukturen des vorgegebenen Gewebetyps,
- Eingeben der hypothetischen Raumbereiche (20) als Eingangsdaten (22) sowie der Referenzpunkte als Zieldaten zum Training des neuronalen Netzes (21),
- repetierendes Anpassen der Gewichte des neuronalen Netzes (21) auf Basis der Differenz zwischen den die Positionen der Gewebestrukturen des vorgegebenen Gewebetyps repräsentierenden und vom neuronalen Netz erzeugten Ausgabedaten (24) und den Zieldaten.

8. Verfahren nach Anspruch 7, **dadurch gekennzeichnet, dass** die Gewebestrukturen vorgegebenen Gewebetyps Knochen-, Knorpel- oder Grätengewebe sind.

9. Verfahren nach einem der Ansprüche 7 oder 8, **dadurch gekennzeichnet, dass** die ersten Röntgenbilder (17), die die zugehörigen mindestens einen weiteren Röntgenbilder (18) als Eingangsdaten und die Referenzpunkte als Zieldaten des neuronalen Netzes (21) mittels Berechnung synthetisiert werden.

10. Verfahren nach einem der Ansprüche 7 oder 8, **dadurch gekennzeichnet, dass** die ersten Röntgenbilder (17) und die zugehörigen mindestens einen weiteren Röntgenbilder (18) als Eingangsdaten (22) durch Bestrahlen der Artikel (10) mit Röntgenstrahlung einer ersten Röntgenquelle (11) und Aufnehmen eines Röntgenbildes (17) auf der der ersten Röntgenquelle (11) abgewandten Seite (14) der Artikel (10) mittels eines ersten Röntgendetektors (13) unter einem ersten Betrachtungswinkel und Bestrahlen der Artikel (10) mit Röntgenstrahlung mindestens einer weiteren Röntgenquelle (12) und Aufnehmen mindestens eines weiteren Röntgenbildes (17) mittels eines weiteren Röntgendetektors (12) unter mindestens einem weiteren von dem ersten Betrachtungswinkel (15) abweichenden weiteren Betrachtungswinkel (16) erzeugt werden und, dass
die Positionsdaten der Gewebestrukturen des vorgegebenen Typs eines jeden der Artikel (10) unter Verwendung eines hochauflösenden bildgebenden Verfahrens ermittelt werden.

11. Vorrichtung zum Lokalisieren der räumlichen Lagen von Gewebestrukturen vorgegebenen Gewebetyps in Artikeln (10) der lebensmittelverarbeitenden Industrie, umfassend
eine zum Bestrahlen der Artikel (10) mit Röntgenstrahlung eingerichtete ersten Röntgenquelle (11) mit einem zum Aufnehmen eines Röntgenbildes (17) unter einem ersten Betrachtungswinkel (15) auf der der ersten Röntgenquelle (11) abgewandten Seite (14) der Artikel (10) angeordneten ersten Röntgendetektor (13),
mindestens eine zum Bestrahlen der Artikel mit Röntgenstrahlung eingerichtete weitere Röntgenquelle (12) mit mindestens einem zum Aufnehmen eines weiteren Röntgenbildes (18) unter mindestens einem von dem ersten Betrachtungswinkel (15) abweichenden weiteren Betrachtungswinkel (16) eingerichteten weiteren Röntgendetektor (13), eine Auswerteeinrichtung (19), die zum Ermitteln hypothetischer Raumbereiche (20) durch Auswerten des ersten Röntgenbildes (17) und des mindestens einen weiteren Röntgenbildes (18) auf Basis mindestens eines vorgegebenen Auswahlkriteriums zur Erkennung der Gewebestrukturen des vorgegebenen Gewebetyps und zum Übergeben der hypothetischen Raumbereiche (20) als Eingangsdaten (22) an ein neuronales Netz (21) ausgebildet und eingerichtet ist, und wobei
das neuronale Netz (21) eingerichtet ist, als Ausgabedaten (24) Positionsdaten der Gewebestrukturen des vorgegebenen Typs zu ermitteln und die Positionsdaten (23) zur Anzeige und/oder Weitergabe an eine nachgeordnete Maschine zur automatisierten Bearbeitung der Artikel (10) auszugeben und/oder bereitzustellen.

12. Vorrichtung nach Anspruch 11, **dadurch gekennzeichnet, dass** die Auswerteeinrichtung (19) ausgebildet ist, die hypothetischen Raumbereiche (20) mittels des vorgegebenen Auswahlkriteriums derart zu ermitteln, dass Bereiche mit möglicherweise vorhandenem Gewebe des vorgegebenen Gewebetyps markiert werden.

13. Vorrichtung nach einem der Ansprüche 11 oder 12, weiter umfassend eine zum Fördern der Artikel in eine Förderrichtung (25) eingerichtete Fördereinrichtung, wobei der erste Röntgendetektor (13) und der mindestens eine weitere Röntgendetektor (13) zum zeilenweisen Erfassen des ersten und des mindestens einen weiteren Röntgenbildes als Röntgen-Zeilendetektoren ausgebildet sind.

14. Vorrichtung nach Anspruch 13, **dadurch gekennzeichnet, dass** die Auswerteeinrichtung (19) ausgebildet ist, die hypothetischen Raumbereiche (20) zeilenweise zu ermitteln.

15. Vorrichtung nach einem der Ansprüche 13 und 14, **dadurch gekennzeichnet, dass** die Auswerteeinrichtung (19) eingerichtet ist, an das neuronale Netz (21) als Eingangsdaten (22) die hypothetischen Raumbereiche (20) jeweils zeilenweise zu übergeben.

16. Verfahren zum automatischen Lösen von Gewebestrukturen vorgegebenen Gewebetyps aus Artikeln 10 der lebensmittelverarbeitenden Industrie, umfassend die Schritte:
Ermitteln von Positionsdaten (23) der Gewebestrukturen vorgegebenen Gewebetyps in den Artikeln (10) mittels einem Verfahren nach einem der Ansprüche 1 bis 6 und
Steuern mindestens eines zum Herauslösen der Gewebestrukturen aus den Artikeln (10) eingerichteten Werkzeugs auf Basis der Positionsdaten (23).

17. Anordnung zum automatischen Lösen von Gewebestrukturen vorgegebenen Gewebetyps aus Artikeln (10) der lebensmittelverarbeitenden Industrie, umfassend
eine Vorrichtung zum Ermitteln von Positionsdaten (23) der Gewebestrukturen vorgegebenen Gewebetyps in den Artikeln (10) nach einem der Ansprüche 11 bis 15 und
eine Steuereinheit sowie ein Werkzeug, wobei die Steuereinheit ausgebildet ist, das Werkzeug zum Herauslösen der Gewebestrukturen aus den Artikeln auf Basis der Positionsdaten (23) zu steuern.
